# EUROPÄISCHE PATENTSCHRIFT

(11) **EP 2 729 680 B1**
(45) Veröffentlichungstag und Bekanntmachung des Hinweises auf die Patenterteilung: **04.11.2015**
(21) Anmeldenummer: 12743404.1
(22) Anmeldetag: 03.07.2012
(51) Int. Cl.: F01N 13/18, F01N 13/10, F16B 39/38

(54) **VERBRENNUNGSMOTOR MIT ZYLINDERKOPF SOWIE VERFAHREN ZUM FESTLEGEN EINES ABGASKRÜMMERS AN EINEM ZYLINDERKOPF**
INTERNAL COMBUSTION ENGINE HAVING A CYLINDER HEAD AND METHOD FOR FASTENING AN EXHAUST MANIFOLD TO A CYLINDER HEAD
MOTEUR À COMBUSTION INTERNE DOTÉ D'UNE CULASSE AINSI QUE PROCÉDÉ DE MONTAGE D'UN COLLECTEUR D'ÉCHAPPEMENT SUR UNE CULASSE

(30) Priorität: 04.07.2011 DE 102011051528
(43) Veröffentlichungstag der Anmeldung: 14.05.2014
(73) Patentinhaber: Flaig, Hartmut, D-78554 Aldingen (DE)
(72) Erfinder: Flaig, Hartmut, D-78554 Aldingen (DE)
(74) Vertreter: Wagner, Kilian
(86) Internationale Anmeldenummer: PCT/EP2012/062894
(87) Internationale Veröffentlichungsnummer: WO 2013/004686

(56) Entgegenhaltungen:
- DE-A1- 19 823 475
- DE-A1- 19 920 822
- DE-A1-102005 062 045

## Beschreibung

Die Erfindung betrifft einen Verbrennungsmotor gemäß dem Oberbegriff des Anspruchs 1, mit einem Zylinderkopf (= Zylinderkopfhaube), an dem ein Abgaskrümmer mit Hilfe von Befestigungsmitteln festgelegt ist, wobei die Befestigungsmittel mindestens einen am Zylinderkopf gehaltenen und eine Durchgangsöffnung im Abgaskrümmer durchsetzenden Gewindebolzen sowie mindestens eine mit einem Innengewindeabschnitt auf den Gewindebolzen aufgeschraubte Mutter umfassen, mit welcher der Abgaskrümmer in Richtung Zylinderkopf kraftbeaufschlagt ist. Zudem betrifft die Erfindung die Verwendung einer Mutter zur Fixierung eines Abgaskrümmers am Zylinderblock eines Motors gemäß Anspruch 12. Ferner betrifft die Erfindung ein Verfahren zum Festlegen eines Abgaskrümmers an einem Zylinderkopf eines Verbrennungsmotors gemäß dem Oberbegriff des Anspruchs 13.

Bei bekannten Verbrennungsmotoren ist der Abgaskrümmer mit Hilfe von mehreren Gewindebolzen/Mutter-Kombinationen am Zylinderkopf fixiert, wobei die Gewindebolzen jeweils eine Durchgangsöffnung im Abgaskrümmer durchsetzen und wobei die mit den Gewindebolzen verschraubten Muttern den Abgaskrümmer, insbesondere ein Abgaskrümmerblech, zwischen einer unteren Stirnseite der Mutter und dem Zylinderkopf verklemmen. In der Praxis besteht das Problem, dass der Krümmer aufgrund der im Betrieb auftretenden Temperaturschwankungen, insbesondere bei der Startphase eines Verbrennungsmotors, zum Schieben neigt, d.h. der Krümmer bewegt sich parallel zur Zylinderkopfoberfläche, wobei über das Krümmerblech und/oder über die sich ausschließlich auf dem Abgaskrümmer abstützende Mutter ein Biegemoment auf dem Gewindebolzen ausgeübt wird. Diese Biegemomente bringen erhebliche Nachteile mit sich. Im besten Fall werden die Gewindebolzen lediglich plastisch verbogen.

Es kann jedoch auch zu einem Abreißen der Gewindebolzen und damit zu einem zumindest partiellen Ablösen des Abgaskrümmers kommen. Auch ist es möglich, dass sich die Mutter aufgrund der Vielzahl von Lastwechseln von den Gewindebolzen lösen und dadurch den Abgaskrümmer freigeben.

Aus der DE 199 20 822 A1 ist ein Verbrennungsmotor bekannt, bei welchen der Krümmer am Zylinderkopf mittels einer Mutter fixiert ist, die sich axial auf einer Distanzbuchse abstützt, die eine Durchgangsöffnung im Abgaskrümmer durchsetzt und sich axial unmittelbar am Abgaskrümmer abstützt. Gemäß einem Ausführungsbeispiel der DE 199 20 822 A1 kann die Distanzhülse auch einstückig mit der Mutter ausgebildet sein, wobei sich in diesem Fall die Mutter über den Distanzhülsenabschnitt unmittelbar am Zylinderkopf abstützt. Gleichzeitig liegt die Mutter mit einem starren Flansch fest auf der Außenseite des Abgaskrümmers auf, wobei es auch bei der bekannten Anordnung aufgrund des im Betrieb auftretenden Biegemomentes zu einer plastischen Verformung des Gewindebolzens und zu einem Abreißen der Mutter kommen kann.

Weiter werden zum Stand der Technik die JP 2004-339947 A, die DE 198 23 475 A1, die DE 100 49 117 A1, die DE 82 19 329, die DE 41 26 744 A1, die DE 198 07 312 A1, die DE 199 60 619 A1, die FR 2 902 457 A3 sowie die JP 8-246868 A genannt.

Ausgehend von dem vorgenannten Stand der Technik liegt der Erfindung daher die Aufgabe zugrunde, die Verbindung zwischen Verbrennungsmotor und Abgaskrümmer insoweit zu verbessern, als dass ein (partielles) Ablösen des Abgaskrümmers vom Verbrennungsmotor durch ein Abreißen von Gewindebolzen und/oder selbsttätiges Lösen von Befestigungsmuttern vermieden wird. Ebenso besteht die Aufgabe darin, ein Verfahren zum Herstellen einer solchen, verbesserten, Verbindung zwischen Verbrennungsmotor und Abgaskrümmer anzugeben.

Diese Aufgabe wird hinsichtlich der Verbrennungsmotor-Abgaskrümmer-Kombination bzw. der Verbindung mit den Merkmalen des Anspruchs 1 bzw. durch die Verwendung einer Mutter gemäß Anspruch 12 und hinsichtlich des Verfahrens mit den Merkmalen des Anspruchs 13 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt ein ganzes Maßnahmenpaket von kumulativ zu realisierenden Merkmalen zugrunde, um die gewünschte, robuste und zuverlässige Verbindung zwischen Verbrennungsmotor und Abgaskrümmer zu erhalten. Um ein selbsttätiges Lösen der Mutter zu vermeiden, ist es gemäß einem ersten Merkmal der erfinderischen Merkmalskombination vorgesehen, Bremsmomentmittel an der Mutter und/oder dem Gewindeelement vorzusehen, die dafür Sorge tragen, dass die Reibung zwischen der Mutter und dem Gewindebolzen erhöht wird bzw. die das Lösemoment erhöhen, welches auf die Mutter aufgebracht werden muss, damit die Mutter entgegen der Einschraubrichtung verdreht werden kann. Wie später noch erläutert werden wird, ist es besonders bevorzugt, wenn hierzu die Mutter als Sicherungsmutter mit den vorgenannten Bremsmomentmitteln ausgestattet wird, wobei es noch weiter bevorzugt ist, wenn die Mutter hierzu Bremsmomentmittel, wie in der WO 2007/076968 A1 offenbart, umfasst. Die Bremsmomentmittel tragen dafür Sorge, dass sich die Mutter trotz eines möglichen Schiebens des Abgaskrümmers nicht löst. Als weitere Maßnahme des Maßnahmepunktes ist erfindungsgemäß vorgesehen, die Durchgangsöffnung im Abgaskrümmer so zu dimensionieren, dass diese nicht nur den Gewindebolzen aufnimmt, sondern so groß dimensioniert ist, vorzugsweise als Langloch ausgebildet ist, dass die Mutter oder alternativ eine der Mutter zugeordnete Hülse die Durchgangsöffnung im Gegensatz zum Stand der Technik durchsetzen kann (d.h. bis zum Zylinderblock oder einer auf den Zylinderblock angeordneten, z.B. metallischen Dichtung reicht), um sich mit einer ersten, vorzugsweise stirnseitigen, entweder unmittelbar an der Mutter oder alternativ an der fakultativen Hülse ausgebildeten ersten Abstützfläche axial am Zylinderkopf oder (zur Schonung der Zylinderoberfläche) einer auf dem Zylinderkopf aufliegenden, zwischen Zylinderblock und Krümmer aufgenommenen Dichtung abstützt. Im Hinblick auf die konkrete Ausgestaltung der sich vorzugsweise in einen Bereich zwischen Zylinderkopf und Krümmer erstreckenden Dichtung gibt es unterschiedliche Möglichkeiten. Bevorzugt handelt es sich um eine, beispielsweise metallische Flachdichtung, die sich bevorzugt in einen Bereich unterhalb der Durchgangsöffnung im Abgaskrümmer erstreckt, so dass sich entweder unmittelbar die Mutter oder alternativ eine Zwischenmutter und Zylinderkopf vorgesehene Hülse mit der ersten Abstützfläche darauf abstützen kann. Alternativ ist es beispielsweise möglich vorgenannte Dichtung auch als Ringdichtung auszubilden, die üblicherweise die Durchgangsöffnung umgibt. Damit sich die Mutter oder alternativ die Hülse auf der Dichtung abstützen kann, muss sich eine derartige Ringdichtung nach radial innen unter dem Krümmer hervor in einen Bereich unterhalb der Durchgangsöffnung erstrecken.

Im Falle des Vorsehens einer Hülse stützt sich die Mutter bevorzugt innerhalb der Durchgangsöffnung axial mit der Hülse ab. Hierdurch wird eine unmittelbare Berührung zwischen Abgaskrümmer und Gewindebolzen vermieden. Um eine Stützwirkung der Mutter auf den Gewindebolzen zu bewirken bzw. zu erhöhen, ist es als weiteres wesentliches Merkmal der Erfindung vorgesehen, dass ein die erste Abstützfläche aufweisender axialer, dem Zylinderkopf zugewandter Abstützabschnitt der Mutter oder alternativ der fakultativen Hülse radial beabstandet ist von dem Gewindebolzen. Anders ausgedrückt ist der Abstützabschnitt als Hebel ausgebildet, welcher durch seine Beabstandung von dem Gewindebolzen ein mögliches, von einem Schieben des Abgaskrümmers verursachtes, Biegemoment gut aufnehmen bzw. abstützen kann. Es wird also bevorzugt ein Umfangsspalt zwischen dem Abstützabschnitt und dem Gewindebolzen realisiert. Der Innendurchmesser des Abstützabschnittes ist also größer als der Außendurchmesser des Gewindebolzens im Bereich des Abstützabschnittes.

Die Erfindung umfasst als weitere zusätzliche Maßnahme, dass die zweite Abstützfläche, mit der sich die Mutter unmittelbar oder nur mittelbar über eine fakultative Gleitscheibe (Unterlegscheibe) am Zylinderkopf an einem im montierten Zustand in axialer Richtung elastisch vorgespannten Federabschnitt der Mutter ausgebildet ist und bevorzugt axial sowie radial beabstandet ist von der ersten Abstützfläche. Durch das Vorsehen des Federabschnittes wird es dem Abgaskrümmer ermöglicht, sich relativ zu der zweiten Abstützfläche zu verschieben, wodurch nicht die gesamte Verschiebekraft von der Mutter aufgenommen werden muss. Die Federwirkung bzw. die Federkraft kann über die Dimensionierung, insbesondere die Dickenerstreckung, des Federabschnitts, dessen Radialerstreckung und/oder die Materialwahl der, bevorzugt aus Metall ausgebildeten, Mutter eingestellt bzw. beeinflusst werden, sowie durch den Axialabstand der ersten zu der zweiten Abstützfläche im nicht montierten Zustand. Darüberhinaus hat das Vorsehen des Federabschnittes den Vorteil, dass Dickentoleranzen des Abgaskrümmers und einer fakultativen, bevorzugt zwischen dem Krümmer und dem Zylinderkopf aufgenommenen Dichtung auf einfache Weise ausgeglichen werden können. Bevorzugt ist der Federabschnitt derart ausgelegt und relativ zu der ersten Abstützfläche angeordnet, dass die Anpresskraft, mit welcher sich die Mutter oder die Hülse am Zylinderkopf oder einer Dichtung in axialer Richtung abstützt, größer ist als die Federkraft, mit welcher die zweite Abstützfläche den Abgaskrümmer in Richtung Zylinderkopf kraftbeaufschlagt.

Insgesamt wird also eine wesentlich verbesserte Verbindung zwischen Verbrennungsmotor und Abgaskrümmer erhalten, indem zum einen Bremsmomentmittel zum Erhöhen des Lösemomentes der Mutter von dem Gewindebolzen vorgesehen werden und indem sich die Mutter nicht wie im Stand der Technik nur mit einer Abstützfläche in axialer Richtung abstützt, sondern dass zwei Abstützflächen vorgesehen werden, wovon eine entweder unmittelbar an der Mutter oder alternativ an einer zwischen Mutter und Motor vorgesehenen fakultativen, insbesondere innengewindefreien, Hülse ausgebildeten erste Abstützfläche zum axialen Abstützen am Zylinderkopf oder einer diesem zugeordneten Dichtung dient und eine zweite Abstützfläche zum unmittelbaren oder mittelbaren Abstützen am Abgaskrümmer, wobei im Gegensatz zum Stand der Technik die dem Abgaskrümmer zugeordnete zweite Abstützfläche an einem Federabschnitt der Mutter ausgebildet ist, um somit ein relatives Verschieben des Abgaskrümmers und damit einen minimierten Krafteintrag in die Mutter zu ermöglichen, wobei die Federkraft abhängig ist vom Axialabstand der beiden, bevorzugt ringförmigen Abstützflächen. Zudem wird durch die radiale Beabstandung des die erste Abstützfläche ausbildenden Abstützabschnittes von dem Gewindeelement ein Stützhebel geschaffen, der ein mögliches, vom Abgaskrümmer auf den Gewindebolzen übertragenes, Drehmoment abfängt bzw. dieses abstützt.

Das Merkmal des Durchsetzens der Durchgangsöffnung wird so verstanden, dass die Mutter öder die fakultative Hülse derart in der Durchgangsöffnung aufgenommen ist, dass sich die Mutter bzw. die Hülse stirnseitig auf dem Zylinderkopf oder der vorerwähnten Dichtung abstützen kann.

Besonders bevorzugt ist die Mutter und/oder die fakultative Hülse radial beabstandet von dem Innenumfang der Durchgangsöffnung im Abgaskrümmer. Besonders bevorzugt ist dieser allseitige Mindestradialabstand bei zentrischer Ausrichtung des Abstützabschnittes zum Durchgangsöffnungsrand aus einem Wertebereich zwischen 0,1 mm und 0,5 mm, vorzugsweise zwischen 0,2 mm und 0,3 mm gewählt.

Ganz besonders bevorzugt handelt es sich bei der Durchgangsöffnung im Abgaskrümmer um ein Langloch, wobei bei zentrischer Anordnung der Mutter bzw. der Hülse bezogen auf die Breiten- und Längenerstreckung des Langlochs der allseitige Radialabstand in Breitenrichtung bevorzugt aus dem vorgenannten Wertebereich zwischen 0,1 mm und 0,5 mm, vorzugsweise zwischen 0,2 und 0,3 mm gewählt ist. Bevorzugt ist der beidseitige Radialabstand in Richtung der Längserstreckung des Langloches größer und noch weiter bevorzugt aus einem Wertebereich zwischen 1 mm und 5 mm, vorzugsweise zwischen 2 mm und 3 mm gewählt, um ein Schieben des Krümmers um dieses Maß in der Längsrichtung des Langlochs zu ermöglichen.

Bevorzugt ist der Federabschnitt, der die zweite Abstützfläche trägt so gestaltet, dass dieser ein Stück weit den Abgaskrümmer mit Axialspiel überragt. Anders ausgedrückt ist bevorzugt radial zwischen der Abstützfläche und dem Kernbereich der Mutter, von welchem der Federabschnitt abragt ein Luftabschnitt bzw. ein freier Abschnitt vorgesehen, der nicht von der Mutter ausgefüllt ist bzw. der von dem Federabschnitt überragt ist. Bevorzugt handelt es sich bei dem Federabschnitt um einen Ringabschnitt, der sich ausgehend von einem axial oberhalb der zweiten Abstützfläche gelegenen Bereich in radialer Richtung sowie nach unten hin zur zweiten Abstützfläche erstreckt. Noch anders ausgedrückt ist bevorzugt in einem Bereich unterhalb des Federabschnittes in einem Bereich axial oberhalb des Abgaskrümmers radial zwischen der Abstützfläche und dem Kernbereich ein Hohlraum vorgesehen.

Ganz besonders zweckmäßig ist es, wenn die Mutter zum Fixieren des Abgaskrümmers als Kaltfließpressteil aus Metall, insbesondere aus einer Stahllegierung, ausgebildet ist.

Ganz besonders zweckmäßig ist es, wenn der axiale Abstützabschnitt als hohlzylindrischer Ringabschnitt ausgebildet ist, der noch weiter bevorzugt umfangsgeschlossen ist. Zweckmäßig ist es, den axialen Abstützabschnitt innengewindefrei auszubilden.

Als vorteilhaft hat es sich herausgestellt, die Axialerstreckung des Abstützabschnittes auf die Axialerstreckung des Innengewindeabschnittes, welcher mit seinem Innengewinde mit dem Außengewinde des Gewindebolzens verschraubt ist, abzustimmen, indem die Axialerstreckung des Abstützabschnittes zur Stabilisierung des Abstützabschnittes geringer gewählt wird als die Axialerstreckung des Innengewindeabschnittes. Ferner ist es von Vorteil, die Wandstärke des Abstützabschnittes (etwas) geringer zu wählen als die Dickenerstreckung des Innengewindeabschnittes, bevorzugt um ein Maß, das dem Radialabstand zwischen dem Innenumfang des Abstützabschnittes und dem gedacht axial verlängerten, radial inneren Umfangsrand des Innengewindes entspricht.

Um möglichst langfristig eine unmittelbare Kraftberührung zwischen Abgaskrümmer und Mutter, insbesondere Abstützabschnitt, in radialer Richtung zu vermeiden bzw. um eine Ausdehnung des Krümmers ohne Berührung der Mutter zu ermöglichen, ist in Weiterbildung der Erfindung mit Vorteil vorgesehen, dass der Durchmesser der Durchgangsöffnung (deutlich) größer gewählt wird als der Durchmesser des, vorzugsweise als Ringhals ausgebildeten, Abstützabschnittes. Als besonders zweckmäßig hat es sich herausgestellt, wenn sich die Mutter über die zweite, an einem Federabschnitt ausgebildete Abstützfläche nicht unmittelbar am Abgaskrümmer, sondern nur mittelbar an diesem über eine Gleitscheibe abstützt, die sich axial zwischen der zweiten Abstützfläche und dem Abgaskrümmer befindet. Hierdurch kann die Gleitneigung des Abgaskrümmers relativ zur zweiten Abstützfläche verbessert werden, wobei das temperaturbedingte Schieben des Abgaskrümmers zu einer noch geringeren Kraftbelastung auf die Befestigungsmittel führt. Besonders zweckmäßig ist es, wenn die Gleitscheibe reibungsreduziert ist, was beispielsweise durch einen Härtungsvorgang, insbesondere durch einen Nitrierungsvorgang erreicht werden kann. Ferner ist es vorteilhaft, einen Radialabstand zwischen dem Innenumfang des Abstützabschnittes bzw. der ersten Abstützfläche und dem Umfangsrand des Durchgangsloches einzuhalten, insbesondere um eine Dimensionierung des Durchgangsloches zu ermöglichen, bei welcher der Durchmesser der Durchgangsöffnung, zumindest näherungsweise, vorzugsweise im Rahmen der Toleranzen, möglichst exakt dem Außendurchmesser des Gewindebolzens entspricht, um hierdurch eine weitere Stützung des Gewindebolzens zu gewährleisten.

Um auf vergleichsweise einfache Art und Weise eine Federwirkung des Federabschnittes zu bewirken bzw. um eine Abstützung der Mutter mit Radialabstand zu einem Kernbereich der Mutter zu ermöglichen, ist in Weiterbildung der Erfindung mit Vorteil vorgesehen, dass der Federabschnitt bezogen auf eine in Bezug auf die Axialerstreckung der Mutter sich radial erstreckende Ebene (Radialebene E) in Richtung Abgaskrümmer abgewinkelt ist, bevorzugt derart, dass in einem Bereich radial zwischen dem Kernbereich der Schraube, insbesondere dem Abstützabschnitt, und dem inneren Rand der zweiten Abstützfläche ein Axialabstand zwischen dem Abgaskrümmer und dem Federabschnitt realisiert ist.

Als besonders zweckmäßig hat es sich herausgestellt, wenn der Federabschnitt von einem umfangsgeschlossenen Umfangsbund gebildet ist, wobei die Federwirkung bzw. die im fixierten Zustand erzielte Vorspannung durch die Dickenerstreckung des Bundes, durch die Materialwahl, die Radialerstreckung und/oder den Neigungswinkel des Umfangsbundes in geeigneter Weise beeinflusst werden kann.

Wie eingangs bereits erwähnt, ist es besonders bevorzugt, wenn die Bremsmomentmittel an der Mutter vorgesehen sind, wobei es bevorzugt ist, wenn die Bremsmomentmittel, vorzugsweise ausschließlich, aufgrund elastischer Verformung und einer dadurch verursachten Reibungserhöhung das Löse- bzw. Haltemoment erhöhen. Beispielsweise kann dies erreicht werden, indem zusätzlich zu dem Innengewindeabschnitt ein, vorzugsweise axial kürzerer, Innengewindeabschnitt vorgesehen ist, der elastisch verstellbar ist und/oder der derart zu dem zweiten Innengewindeabschnitt versetzt ist, dass das Bremsmoment resultiert. Ganz besonders bevorzugt wird die Bremsmomentwirkung wie in der WO 2007/076968 A1 offenbart erzielt, deren Offenbarungsgehalt in die vorliegende Anmeldung im Hinblick auf eine vorteilhafte Ausbildung der Bremsmomentmittel als mit einbezogen und beanspruchbar gelten soll. Zusätzlich oder alternativ zu Bremsmomentmitteln an der Mutter können Bremsmomentmittel am Gewindebolzen vorgesehen werden, beispielsweise durch eine Deformierung des Außengewindes des Gewindebolzens.

Im Hinblick auf die Ausgestaltung des elastisch vorspannbaren bzw. vorgespannten Federabschnittes, an welchem die zweite Abstützfläche ausgebildet ist, gibt es unterschiedliche Möglichkeiten.

So kann dieser Federabschnitt beispielsweise in der Art einer Tellerfeder ausgebildet werden, also eher in radialer Richtung flach verlaufend oder es ist beispielsweise möglich einen im Wesentlichen um 90° gekrümmten, insbesondere dosenartig geformten, Federarm vorzusehen, der in radialer Richtung über den eigentlichen Mutterkörper vorsteht und dann axial in Richtung Abgaskrümmer orientiert ist.

Die Erfindung führt auch auf ein Verfahren zum Festlegen eines Abgaskrümmers an einem Zylinderkopf (Zylinderkopfhaube) eines Verbrennungsmotors bzw. mit anderen Worten zur Herstellung einer erfindungsgemäßen Verbindung aus Verbrennungsmotor und Abgaskrümmer mit den Schritten: Bereitstellen eines Zylinderkopfes, Bereitstellen eines Abgaskrümmers mit mindestens einer Durchgangsöffnung (die so dimensioniert ist, dass die Mutter die Durchgangsöffnung axial durchsetzen kann), Bereitstellen einer einen Innengewindeabschnitt aufweisenden Mutter, Bereitstellen eines, vorzugsweise an dem Zylinderkopf bereits gehaltenen, Gewindebolzens - alternativ kann der Gewindebolzen auch als Teil des Verfahrens am Zylinderkopf, beispielsweise durch Verschrauben, festgelegt werden -, Relativpositionieren von Abgaskrümmer und (bevorzugt, jedoch nicht zwingend bereits am Zylinderkopf festgelegten) Gewindebolzen derart, dass dieser die Durchgangsöffnung des Abgäskrümmers durchsetzt und Aufschrauben der Mutter mit ihrem Innengewindeabschnitt auf den Gewindebolzen und dadurch Kraftbeaufschlagen des Abgaskrümmers in Richtung Zylinderkopf. Dabei kann sich gemäß einer ersten Alternative unmittelbar die Mutter am Zylinderkopf oder einer auf dem Zylinderkopf aufliegenden Dichtung abstützen oder gemäß einer zweiten Alternative ein fakultative Hülse, die im Falle ihres Vorgehens selbstverständlich vor der Mutter auf dem Gewindebolzen aufgebracht werden muss. Erfindungsgemäß ist nun vorgesehen, dass die Mutter derart auf dem Gewindebolzen aufgeschraubt wird, dass Bremsmomentmittel der Mutter und/oder des Gewindebolzens das Lösemoment, welches benötigt wird, um die Mutter wieder zu lösen, im Vergleich zu einer Ausführungsform ohne Bremsmomentmittel erhöhen, wobei die Mutter oder die fakultative Hülse zudem so montiert wird, dass sie (Mutter bzw. Hülse) im montierten Zustand die entsprechend weiter dimensionierte Durchgangsöffnung im Abgaskrümmer axial durchsetzt und sich mit einer ersten Abstützfläche axial am Zylinderkopf oder einer Dichtung abstützt und sich die Mutter mit einer zweiten Abstützfläche axial am Abgaskrümmer, wobei es wesentlich ist, dass die zweite Abstützfläche an einem radial vorstehenden Federabschnitt der Mutter angeordnet ist, der beim bzw. durch das Verschrauben der Mutter in axialer Richtung in axialer Richtung elastisch vorgespannt wird, um sich mit einer entsprechenden Vorspannkraft am Zylinderkopf oder der Dichtung abzustützen, wobei die Vorspannkraft bevorzugt so gewählt bzw. ausgelegt ist, dass ein Schieben des Abgaskrümmers bei Temperaturveränderungen parallel zur Zylinderkopfoberfläche und relativ zur Mutter ermöglicht wird. Wesentlich ist auch, dass die erste Abstützfläche von einer Stirnseite eines axialen Abstützelementes gebildet ist, der radial von dem Gewindebolzen beabstandet ist.

Bevorzugt wird die Durchgangsöffnung bereits entsprechend dimensioniert zur Aufnahme der Mutter und/oder der fakultativen Hülse bereitgestellt, kann auch alternativ als Teil des Verfahrens entsprechend dimensioniert, d.h. eingebracht, insbesondere eingebohrt oder beispielsweise mittels Laser eingeschnitten werden. Bevorzugt ist die Durchgangsöffnung als Langloch ausgeführt.

Wie bereits angedeutet, ist es bevorzugt, wenn die Festlegung des mindestens einen Gewindebolzens vor dem Relativpositionieren des Abgaskrümmers zu den Gewindebolzen erfolgt. Denkbar ist es jedoch, dass alternativ auch ein die Durchgangsöffnung des Abgaskrümmers bereits durchsetzender Bolzen in einem späteren Verfahrensschritt am Zylinderkopf erst festgelegt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine ausschnittsweise Darstellung eines Verbrennungsmotors bzw. der Verbindung aus einem Abgaskrümmer und einem Zylinderkopf,
- Fig. 2:: ein vergrößertes Detail A aus Fig. 1,
- Fig. 3:: eine Ansicht einer zum Fixieren des Abgaskrümmers zum Einsatz kommende Mutter,
- Fig. 4:: eine Längsschnittansicht durch die Mutter gemäß Fig. 3 entlang der Schnittlinie C-C,
- Fig. 5:: ein vergrößertes Detail A der Schnittansicht gemäß Fig. 4, welche Bremsmomentmittel zeigt,
- Fig. 6:: ein vergrößertes Detail B aus Fig. 4, welches den als Umfangsbund ausgebildeten Federabschnitt mit zweiter Abstützfläche zeigt,
- Fig. 7:: eine Draufsicht auf ein alternatives Ausführungsbeispiel einer Abgaskrümmerfixiermutter, und
- Fig. 8:: eine Schnittansicht der Mutter gemäß Fig. 7 entlang der Schnittlinie A - A, wobei zusätzlich zu der Darstellung gemäß Fig. 7 eine Gleitscheibe (Unterlegscheibe) eingezeichnet ist.

In den Figuren sind gleiche Elemente und Elemente mit der gleichen Funktion mit den gleichen Bezugszeichen gekennzeichnet.

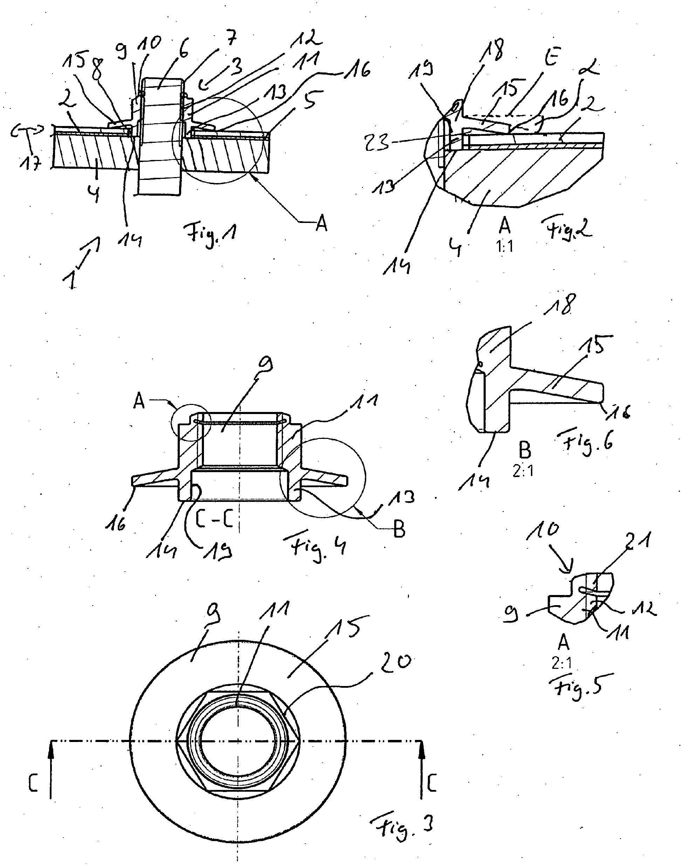

In Fig. 1 ist ein Verbrennungsmotor 1, mit daran festgelegtem Abgaskrümmer 2 (Verbindung aus Verbrennungsmotor 1 und Abgaskrümmer 2) gezeigt. Der Abgaskrümmer 2 ist dabei mit Hilfe von Befestigungsmitteln 3 an einem Zylinderkopf 4 des Verbrennungsmotors festgelegt, wobei zwischen Abgaskrümmer 2 und Zylinderkopf 4 eine flache Dichtung angeordnet ist.

Die Befestigungsmittel 3 umfassen einen Gewindebolzen 6 mit Außengewinde 7, wobei der Gewindebolzen 6 am Zylinderkopf, beispielsweise durch Verschrauben, festgelegt ist. Jedenfalls ragt der Gewindebolzen 6 über die Oberfläche des Zylinderkopfes 4 hinaus und durchsetzt eine Durchgangsöffnung 8 in einem Blech des Abgaskrümmers 2. Hierdurch wird eine unmittelbare Berührung zwischen Abgaskrümmer 2 und Gewindebolzen 6 vollständig ausgeschlossen. Mit vorgenannter Durchgangsöffnung 8 fluchtet axial eine nicht näher gekennzeichnete Öffnung in der Dichtung 5.

Ferner umfassen die Befestigungsmittel 3 eine als Sicherungsmutter ausgebildete Mutter 9, welche in einem von dem Zylinderkopf 4 abgewandten Bereich Bremsmomentmittel 10 aufweist, die in dem gezeigten Ausführungsbeispiel wie in der WO 2007/076968 A1 ausgebildet sind, sodass zur Vermeidung von Wiederholungen im Hinblick auf die konkrete Ausbildung von bevorzugten Bremsmomentmitteln 10 auf vorstehende Offenlegungsschrift verwiesen wird. Die Bremsmomentmittel 10 sind jedenfalls so ausgebildet, dass sie das Lösemoment zum Lösen der Mutter 9 im Vergleich zu einer Ausführung ohne Bremsmomentmittel 10 erhöhen und damit die Mutter 9 gegen Lösen, beispielsweise durch Vibrationen oder ein Verdrehen der Mutter durch ein Schieben des Krümmers, sichern.

Die Mutter 9 umfasst einen axial benachbart zu den Bremsmomentmitteln 10 angeordneten Innengewindeabschnitt 11 mit Innengewinde 12, mit welchem die Mutter 9 mit dem Außengewinde 7 des Gewindebolzens 6 verschraubt ist.

In dem in Fig. 1 gezeigten Zustand durchsetzt die Mutter 9 mit einem Hals, oder anders ausgedrückt mit einem axialen, hohlzylindrischen Abstützabschnitt 13, die Durchgangsöffnung 8 im Zylinderkopf 4 und stützt sich axial mit einer stirnseitig an dem Abstützabschnitt 13 ausgebildeten ersten Abstützfläche 14 (hier eine Ringfläche) unmittelbar an der Außenseite bzw. Außenoberfläche des Zylinderkopfes 4 ab.

Alternativ ist es möglich, den Abstützabschnitt 13 nicht unmittelbar an der Mutter, sondern an einem von der Mutter separaten Hülsenbauteil auszubilden, welches sich dann zwischen Mutter und Zylinderkopf 4 befindet. In diesem Fall befindet sich dann auch die erste Abstützfläche 14 nicht an der Mutter, sondern an der dieser zugeordneten Hülse. Die Mutter hat dann eine Abstützfläche zum Abstützen an der Hülse, insbesondere im Bereich innerhalb der Durchgangsöffnung. Grundsätzlich ist jedoch eine einteilige Ausführung von Mutter und Hülsenabschnitt bevorzugt.

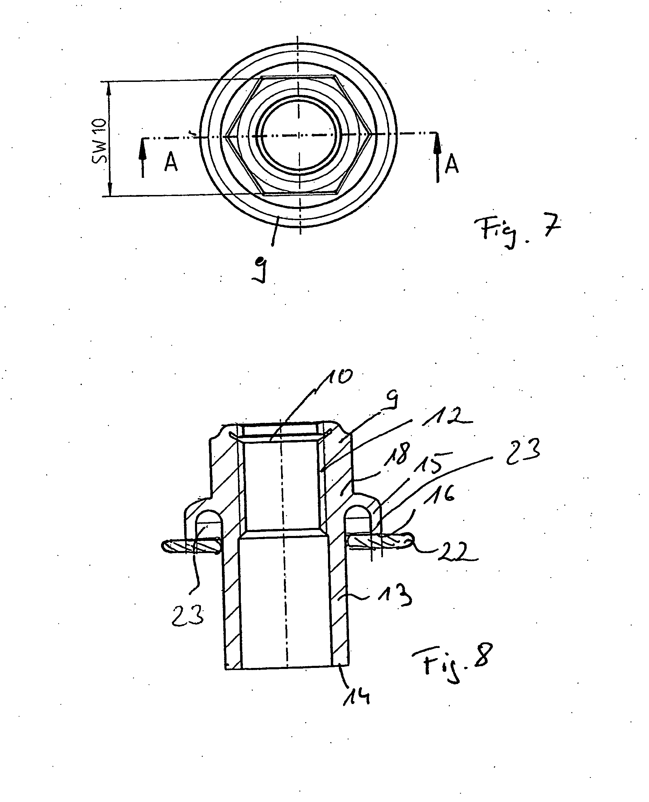

Auch ist eine Ausführungsform möglich, bei der sich Mutter, oder falls vorgesehen die Hülse axial an der Dichtung 5 abstützt - hierzu muss diese radial weiter nach innen in einen Bereich unterhalb der Durchgangsöffnung 8 reichen. Dies gilt auch für eine später noch zu erläuternde Ausführungsform gemäß den Fig. 7 und 8.

Ferner umfasst die Mutter 9 einen als Umfangsbund ausgebildeten Federabschnitt 15, an dessen unterer Stirnseite im Randbereich eine hier ringförmige zweite Abstützfläche 16 ausgebildet ist, mit der sich die Mutter 9 axial am Abgaskrümmer 2 abstützt, wobei im montierten Zustand der Federabschnitt 15 in axialer Richtung vorgespannt ist und somit den Abgaskrümmer 2 federkraftbelastet.

Die Vorspannung bzw. Federkraft ist dabei so bemessen, dass der Abgaskrümmer 2, wenn dieser beispielsweise temperaturbedingt in den Pfeilrichtungen 17 schiebt, nicht zwangsläufig die Mutter 9 mitnimmt, sondern relativ zu dieser unter dem Federabschnitt 15 hindurch rutschen bzw. entlang von diesem (reibgleiten) kann.

Aus Fig. 1 wird deutlich, dass der Abstützabschnitt 13 über einen konischen Übergangsbereich unmittelbar übergeht in den Innengewindeabschnitt 11 bzw. dass die beiden Abschnitte axial aneinander angrenzen. Zu erkennen ist auch der Radialabstand zwischen dem hier gewindefreien Innenumfang des Abstützabschnittes 13 und dem Außenumfang des Gewindebolzens 6.

Letzteres wird auch aus der Detailvergrößerung gemäß Fig. 2 deutlich. Dort ist der als Umfangsbund ausgebildete Federabschnitt 15 gezeigt, der mit Radialabstand zu einem den zylindrischen Innengewindeabschnitt und den zylindrischen Abstützabschnitt 13 umfassenden Kernbereich mit der zweiten Abstützfläche 16 auf dem Zylinderkopf 4 aufliegt bzw. diesen in Richtung Zylinderkopf 4, d.h. senkrecht zu den Pfeilrichtungen 17, kraftbeaufschlagt.

Zu erkennen ist auch ein Axialabstand (Luftspalt) eines zwischen der zweiten Abstützfläche 16 und dem Kernbereich 18, hier dem Abstützabschnitt 13, alternativ dem Innengewindeabschnitt 11, angeordneten Radialabschnitt des Federabschnitts 15.

Zu erkennen ist ferner, dass sich der Federabschnitt 15 ausgehend von dem Kernbereich 18 schräg in der Zeichnungsebene nach unten in Richtung Zylinderkopf 4 erstreckt. Dabei schließt der Federabschnitt 15 mit einer Radialebene E einen Winkel α ein.

Aus Fig. 2 ergibt sich weiterhin, dass der sich über die erste Abstützfläche 14 unmittelbar am Zylinderkopf 4 abstützende Hals bzw. Abstützabschnitt 13 eine geringere Radialerstreckung (Wandstärke) aufweist als der axial darüber angeordnete Innengewindeabschnitt 11, wobei in dem gezeigten Ausführungsbeispiel der Außenumfang (Mantelfläche) des Abstützabschnittes 13 und des Innengewindeabschnittes 11 in axialer Richtung fluchten - der Abstand zwischen einer Innenumfangsfläche 19 und dem Gewindebolzen 6 beträgt bevorzugt mehr als ein Millimeter und in dem gezeigten Ausführungsbeispiel etwa drei Millimeter. Grundsätzlich kann der Radialabstand geringer gewählt werden, wobei dieser vorzugsweise jedoch mehr als 0,1 mm, noch weiter bevorzugt 0,2 mm oder mehr, ganz besonders 0,5 mm oder mehr beträgt. Wesentlich ist, dass Abstützschenkel 13 und Gewindebolzen 6 radial voneinander beabstandet sind, um ein von einem Verschieben des Abgaskrümmers 2 herrührendes Biegemoment auszugleichen.

In den Fig. 3 bis 5 ist die Mutter 9 der Verbindung gemäß Fig. 1 in Alleinstellung zur Verdeutlichung von deren Merkmalen gezeigt. Zu erkennen ist der als schräger Umfangsbund ausgebildete Federabschnitt sehr deutlich in Fig. 3 sowie der von Schlüsselflächen gebildete Antrieb 20, welcher am Innengewindeabschnitt 11 ausgebildet ist.

Aus Fig. 4 wird deutlich, dass in dem gezeigten Ausführungsbeispiel die Wandstärke des Abstützabschnittes 13 in etwa der halben Wandstärke des Innengewindeabschnittes 11 entspricht.

Aus Fig. 4 ist der axiale Versatz sowie auch der radiale Versatz zwischen der ersten Abstützfläche 14 und der zweiten Abstützfläche 16 ersichtlich. Der vorgenannte Axialabstand zwischen den Abstützflächen 14, 16 ist im montierten Zustand größer ist als im unmontierten Zustand, da im montierten Zustand der in Fig. 6 im Detail gezeigte Federabschnitt 15 in axialer Richtung gebogen und damit elastisch vorgespannt ist.

In Fig. 5 sind die bevorzugt (doch nicht zwingend) an der Mutter 9 ausgebildeten Bremsmomentmittel 10 gezeigt.

Diese umfassen ein elastisch in Bezug auf das Innengewinde 12 des Innengewindeabschnitts 11 auslenkbares Gewindeeingriffelement 21, welches beim Verschrauben mit dem Außengewinde 7 des Gewindebolzens 6 ausgelenkt wird und damit die Reibung bzw. das Halte- und Lösemoment erhöht.

In den Fig. 7 und 8 ist eine alternative, als Sicherungsmutter ausgebildete Mutter 9 zur Fixierung eines Abgaskrümmers an einem Verbrennungsmotor gezeigt, wobei auf die Darstellung des Verbrennungsmotors und des Abgaskrümmers aus Übersichtlichkeitsgründen verzichtet wurde. Diesbezüglich wird auf die vorstehenden Figuren verwiesen, d.h. die in den Fig. 7 und 8 gezeigte Mutter 9 kann anstelle der dort gezeigten Mutter 9 eingesetzt werden, wobei im Unterschied zu dem Ausführungsbeispiel gemäß den Fig. 1 bis 6 sich die Mutter 9 über die zweite Abstützfläche 16 nicht unmittelbar auf dem Abgaskrümmer abstützt, sondern auf einer sich unmittelbar auf dem Abgaskrümmer abstützenden Gleitscheibe 22, die von der Mutter 9, genauer dem Abstützabschnitt 13 durchsetzt ist. Dies bedeutet, dass sich in der Zeichnungsebene unterhalb der zweiten Abstützfläche 16, die an dem Federabschnitt 15 ausgebildet ist, die z.B. aus nitriertem Stahl ausgebildete Gleitscheibe 22 befindet. Diese liegt auf dem Abgaskrümmer 2 auf, unterhalb dessen sich bevorzugt die Dichtung 5 befindet, unterhalb deren wiederum der eigentliche Zylinderkopf angeordnet ist. Die Gleitscheibe 22 erhöht die Gleitneigung des Abgaskrümmers 2 relativ zu der Mutter 9, so dass die Einleitung von Kräften und Drehmomenten in die Mutter 9 über die Abstützfläche 16 minimiert wird. Die gezeigte Ausführungsform der Mutter (oder einer Mutter-Hülse in Kombination) kann auch ohne Gleitscheibe realisiert werden, insbesondere wenn die Abgaskrümmeroberfläche entsprechende Gleiteigenschaften aufweist.

Wie sich aus den Fig. 7 und 8 weiter ergibt, unterscheidet sich die dort gezeigte Mutter 9 von der in den Fig. 1 bis 6 gezeigten Mutter durch die Ausgestaltung des Federabschnittes 15. Dieser ist bei dem Ausführungsbeispiel gemäß den Fig. 7 und 8 weniger elastisch und zeichnet sich durch einen Federarm aus, der sich ausgehend von dem Kernbereich 18 in radialer Richtung erstreckt und dann um 90° in der Zeichnungsebene nach unten und damit in Richtung Gleitscheibe 22 gebogen ist. Der Federabschnitt weist bei dem Ausführungsbeispiel gemäß den Fig. 7 und 8 einen Abschnitt 23 auf, der koaxial zum Kernbereich 18 angeordnet ist bzw. der als Zylinderabschnitt ausgebildet ist und sich axial erstreckt. Wie bei dem vorstehenden Ausführungsbeispiel ist die zweite Abstützfläche 16 über einen Luftabschnitt 23, also einem nicht von der Mutter ausgefüllten Abschnitt radial beabstandet vom Kernbereich 18 der Mutter. Anders ausgedrückt überbrückt der Federabschnitt 15 den Luftabschnitt 23 in radialer Richtung.

Auch die Mutter gemäß den Fig. 7 und 8 weist analog dem vorstehenden Ausführungsbeispiel ausgebildete Bremsmomentmittel 10 auf und der Abstützabschnitt 13 weist endseitig, d.h. stirnseitig eine ringförmige erste Abstützfläche 14 zum unmittelbaren Abstützen auf dem Zylinderkopf 4 auf.

Bezüglich weiterer Gemeinsamkeiten wird auf die vorstehenden Figuren mit zugehöriger Figurenbeschreibung verwiesen. Wesentlich bei dem gezeigten Ausführungsbeispiel ist auch, dass der Innenumfang des Abstützabschnittes 13 in radialer Richtung beabstandet ist von dem Außengewinde eines beispielsweise in Fig. 1 gezeigten Gewindebolzens 6 und damit in radialer Richtung beabstandet ist von der gedachten axialen Verlängerung des Innengewindes 12 im Kernbereich 18.

Auch bei der weiteren Ausführungsform kann der Abstützabschnitt alternativ an einer fakultativen Hülse und nicht unmittelbar an der Mutter vorgesehen werden, was jedoch bevorzugt ist.

### Bezugszeichenliste

- 1: Verbrennungsmotor
- 2: Abgaskrümmer
- 3: Befestigungsmittel
- 4: Zylinderkopf
- 5: Dichtung
- 6: Gewindebolzen
- 7: Außengewinde
- 8: Durchgangsöffnung
- 9: Mutter
- 10: Bremsmomentmittel
- 11: Innengewindeabschnitt
- 12: Innengewinde
- 13: Abstützabschnitt
- 14: erste Abstützfläche
- 15: Federabschnitt
- 16: zweite Abstützfläche
- 17: Pfeilrichtungen
- 18: Kernbereich
- 19: Innenumfang
- 20: Antrieb
- 21: Gewindeeingriffselement
- 22: Gleitscheibe
- 23: Luftabschnitt

- E: Radialebene

## Patentansprüche

1. Verbrennungsmotor (1) mit einem Zylinderkopf (4), an dem ein Abgaskrümmer (2) mit Hilfe von Befestigungsmitteln (3) festgelegt ist, wobei die Befestigungsmittel (3) mindestens einen am Zylinderkopf (4) gehaltenen und eine Durchgangsöffnung (8) im Abgaskrümmer (2) durchsetzenden Gewindebolzen (6) sowie mindestens eine mit einem Innengewindeabschnitt (11) auf den Gewindebolzen (6) aufgeschraubte Mutter (9) umfassen, mit welcher der Abgaskrümmer (2) in Richtung Zylinderkopf (4) kraftbeaufschlagt ist, wobei sich die Mutter (9) unmittelbar oder mittelbar über eine erste Abstützfläche (14) axial am Zylinderkopf (4) und/oder an einer auf dem Zylinderkopf aufliegenden Dichtung abstützt, und sich mit einer zweiten Abstützfläche axial unmittelbar oder mittelbar am Abgaskrümmer (2) abstützt, wobei die erste Abstützfläche (14) von einer Stirnseite eines axialen, die Durchgangsöffnung (8) durchsetzenden Abstützabschnittes (13) gebildet ist, dessen Innenumfangsfläche (19) radial beabstandet ist von dem Gewindebolzen (6), wobei der Abstützabschnitt (13) von der Mutter (9) oder einer fakultativen Hülse gebildet ist,
**dadurch gekennzeichnet,**
**dass** die Befestigungsmittel (3) Bremsmomentmittel (10) zum Erhöhen des Lösemomentes umfassen, und dass die zweite Abstützfläche (16) an
einem radial vorstehenden, in axialer Richtung elastisch vorgespannten Federabschnitt (15) der Mutter (9) ausgebildet ist.

2. Verbrennungsmotor nach Anspruch 1,
**dadurch gekennzeichnet,**
**dass** der axiale Abstützabschnitt (13) hohlzylindrisch und vorzugsweise innengewindefrei ausgebildet ist.

3. Verbrennungsmotor nach einem der Ansprüche 1 oder 2,
**dadurch gekennzeichnet,**
**dass** die Axialerstreckung des benachbart zu dem Innengewindeabschnitt (11) der Mutter (9) angeordneten Abstützabschnittes (13) geringer ist als die des Innengewindeabschnittes (11).

4. Verbrennungsmotor nach einem der vorhergehenden Ansprüche,
**dadurch gekennzeichnet,**
**dass** der Abstützabschnitt (13) mit Radialspiel zum Abgaskrümmer (2) und/oder mit Radialspiel zu dem Innenumfang einer von dem Gewindebolzen (6) durchsetzten Öffnung (8) im Zylinderkopf (4) angeordnet ist.

5. Verbrennungsmotor nach einem der vorhergehenden Ansprüche,
**dadurch gekennzeichnet,**
**dass** der Federabschnitt (15) bezogen auf eine Radialebene (E) abgewinkelt ist und in Richtung Abgaskrümmer (2) schräg verläuft, insbesondere unter einem Winkel zwischen 10° und 70°, bevorzugt zwischen 20° und 60°.

6. Verbrennungsmotor nach einem der vorhergehenden Ansprüche,
**dadurch gekennzeichnet,**
**dass** der Federabschnitt (15) von einem, vorzugsweise umfangsgeschlossenen, Umfangsbund gebildet ist.

7. Verbrennungsmotor nach einem der vorhergehenden Ansprüche,
**dadurch gekennzeichnet,**
**dass** der Federabschnitt (15) sich ausgehend von einem den Abstützabschnitt (13) und den Innengewindeabschnitt (11) umfassenden Zentralbereich der Schraube in radialer Richtung erstreckt, vorzugsweise ausgehend von einem Übergangsbereich zwischen Abstützabschnitt (13) und Innengewindeabschnitt (11).

8. Verbrennungsmotor nach einem der vorhergehenden Ansprüche,
**dadurch gekennzeichnet,**
**dass** die Bremsmomentmittel (10) an der Mutter (9) vorgesehen sind,

9. Verbrennungsmotor nach einem der vorhergehenden Ansprüche,
**dadurch gekennzeichnet,**
**dass** die Bremsmomentmittel (10) ein eine Erhöhung der Reibung zwischen Mutter (9) und Gewindebolzen (6) aufgrund elastischer Verformung eines benachbart zum Innengewindeabschnitt (11) angeordneten Gewindeeingriffabschnitts (21) bewirkend ausgebildet sind.

10. Verbrennungsmotor nach einem der vorhergehenden Ansprüche,
**dadurch gekennzeichnet,**
**dass** sich die Mutter (9) mit der zweiten Abstützfläche (16) am Abgaskrümmer (2) oder an einer auf dem Abgaskrümmer (2) aufliegenden Gleitscheibe (22) abstützt.

11. Verbrennungsmotor nach Anspruch 10,
**dadurch gekennzeichnet,**
**dass** die Gleitscheibe (22) gehärtet, insbesondere nitriert ist.

12. Verwendung einer einen Innengewindeabschnitt (11) mit Innengewinde (12) aufweisenden Mutter (9) zum Festlegen eines Abgaskrümmers (2) an einen Zylinderkopf (4) eines Verbrennungsmotors, wobei die Mutter (9) Bremsmomentmittel (10) zum Erhöhen des Lösemoments umfasst, und wobei der Mutter eine an der Mutter oder an einer fakultativen Hülse vorgesehene erste Abstützfläche (14) zum axialen Abstützen am Zylinderkopf und/oder einer auf dem Zylinderkopf aufliegenden Dichtung zugeordnet ist und eine zweite Abstützfläche zum axialen Abstützen am Abgaskrümmer (2) oder an einer auf dem Abgaskrümmer (2) aufliegenden Gleitscheibe, wobei die zweite Abstützfläche (16) an einem radial vorstehenden, in axialer Richtung elastisch vorgespannten Federabschnitt (15) der Mutter (9) ausgebildet ist und wobei die erste Abstützfläche (14) von einer Stirnseite eines axialen Abstützabschnittes (13) der Mutter oder der Hülse gebildet ist, dessen Innenumfangsfläche (19) radial beabstandet ist von einer gedachten axialen Verlängerung des Innengewindes (12).

13. Verfahren zum Festlegen eines Abgaskrümmers (2) an einem Zylinderkopf (4) eines Verbrennungsmotor (1) gemäß einem der vorhergehenden Ansprüche mit den Schritten:
- Bereitstellen eines Zylinderkopfes (4)
- Bereitstellen eines Abgaskrümmers (2) mit mindestens einer Durchgangsöffnung (8)
- Bereitstellen einer einen Innengewindeabschnitt (11) aufweisenden Mutter (9)
- Bereitstellen eines, vorzugsweise an dem Zylinderkopf (4) gehaltenen, Gewindebolzens (6)
- Relativpositionieren von Abgaskrümmer (2) und Gewindebolzen (6) derart, dass dieser die Durchgangsöffnung (8) des Abgaskrümmers (2) durchsetzt
- Aufschrauben der Mutter (9) mit ihrem Innengewindeabschnitt (11) auf den Gewindebolzen (6) und dadurch Kraftbeaufschlagen des Abgaskrümmers (2) in Richtung Zylinderkopf (4), derart, dass die Mutter (9) oder eine zuvor auf dem Gewindeboden (6) aufgesteckte fakultative Hülse die Durchgangsöffnung (8) im Abgaskrümmer (2) durchsetzt und sich mit einer ersten Abstützfläche (14) axial am Zylinderkopf (4) oder einer auf dem Zylinderkopf aufliegenden Dichtung abstützt und sich die Mutter mit einer zweiten Abstützfläche (16) axial am Abgaskrümmer (2) abstützt, wobei die erste Abstützfläche (14) von einer Stirnseite eines axialen Abstützabschnittes. (13) der Mutter oder der fakultativen Hülse gebildet ist, dessen Innenumfangsfläche (19) radial beabstandet ist von dem Gewindebolzen (6),
**dadurch gekennzeichnet,**
**dass** die Mutter (9) derart auf den Gewindebolzen (6) aufgeschraubt wird, dass Bremsmomentmittel (10) das Lösemoment erhöhen, und dass die zweite Abstützfläche (16) an einem radial vorstehenden Federabschnitt (15) der Mutter (9) angeordnet ist, der beim Verschrauben der Mutter (9) gegen den Zylinderkopf (4) in axialer Richtung elastisch vorgespannt wird.

14. Verfahren nach Anspruch 13,
**dadurch gekennzeichnet,**
**dass** die Durchgangsöffnung (8) derart dimensioniert wird, dass die Mutter (9) oder die fakultative Hülse diese, bevorzugt mit allseitigem Radialspiel, insbesondere von mindestens 0,1 mm, vorzugsweise von mindestens 0, 2 mm, axial durchsetzen kann.

## Claims

1. An internal combustion engine (1) having a cylinder head (4), to which an exhaust manifold (2) is fastened by means of fastening elements (3), wherein the fastening elements (3) comprise at least one threaded bolt (6) retained on the cylinder head (4) and passing through a passage opening (8) in the exhaust manifold (2) and at least one nut (9) screwed onto the threaded bolt (6) by means of an internal thread section (11), by means of which nut force is applied to the exhaust manifold (2) in the direction of the cylinder head (4), wherein the nut (9) is directly or indirectly supported axially on the cylinder head (4) and/or on a seal lying on the cylinder head by means of a first supporting surface (14) and is directly or indirectly supported axially on the exhaust manifold (2) by means of a second supporting surface, wherein the first supporting surface (14) is formed by an end face of an axial supporting section (13) passing through the passage opening (8), the inner circumferential surface (19) of said supporting section being located at a radial distance from the threaded bolt (6), wherein the supporting section (13) is formed by the nut (9) or an optional sleeve,
**characterized in that**
the fastening elements (3) comprise braking torque means (10) for increasing the loosening torque, and the second supporting surface (16) is formed on a radially protruding spring section (15) of the nut (9) that is elastically preloaded in the axial direction.

2. The internal combustion engine according to Claim 1, **characterized in that** the axial supporting section (13) is constructed so as to be hollow-cylindrical and preferably free of an internal thread.

3. The internal combustion engine according to one of Claims 1 or 2, **characterized in that** the axial extent of the supporting section (13) arranged adjacent to the internal thread section (11) of the nut (9) is smaller than that of the internal thread section (11).

4. The internal combustion engine according to one of the preceding claims, **characterized in that** the supporting section (13) is arranged with radial play to the exhaust manifold (2) and/or with radial play to the inner circumference of an opening (8) in the cylinder head (4) passed through by the threaded bolt (6).

5. The internal combustion engine according to one of the preceding claims, **characterized in that** the spring section (15) is angled with respect to a radial plane (E) and runs obliquely in the direction of the exhaust manifold (2), in particular at an angle of between 10° and 70°, preferably between 20° and 60°.

6. The internal combustion engine according to one of the preceding claims, **characterized in that** the spring section (15) is formed by a, preferably circumferentially closed, circumferential flange.

7. The internal combustion engine according to one of the preceding claims, **characterized in that** the spring section (15) extends in radial direction starting from a central region of the screw comprising the supporting section (13) and the internal thread section (11), preferably starting from a transition region between supporting section (13) and internal thread section (11).

8. The internal combustion engine according to one of the preceding claims, **characterized in that** the braking torque means (10) are provided on the nut (9).

9. The internal combustion engine according to one of the preceding claims, **characterized in that** the braking torque means (10) are constructed bringing about an increase of the friction between nut (9) and threaded bolt (6) owing to elastic deformation of a thread engagement section (21) arranged adjacent to the internal thread section (11).

10. The internal combustion engine according to one of the preceding claims, **characterized in that** the nut (9) is supported by means of the second supporting surface (16) on the exhaust manifold (2) or on a sliding disc (22) lying on the exhaust manifold (2).

11. The internal combustion engine according to Claim 10, **characterized in that** the sliding disc (22) is hardened, in particular nitrided.

12. A use of a nut (9) having an internal thread section (11) with internal thread (12), for fastening an exhaust manifold (2) onto a cylinder head (4) of an internal combustion engine, wherein the nut (9) comprises braking torque means (10) for increasing the loosening torque, and wherein there is associated with the nut a first supporting surface (14), provided on the nut or on an optional sleeve, for the axial supporting on the cylinder head and/or a seal lying on the cylinder head, and a second supporting surface for the axial supporting on the exhaust manifold (2) or on a sliding disc lying on the exhaust manifold (2), wherein the second supporting surface (16) is formed on a radially protruding spring section (15) of the nut (9) that is elastically preloaded in the axial direction and wherein the first supporting surface (14) is formed by an end face of an axial supporting section (13) of the nut or of the sleeve, the inner circumferential surface (19) of which is located at a radial distance from an imaginary axial extension of the internal thread (12).

13. A method for fastening an exhaust manifold (2) to a cylinder head (4) of an internal combustion engine (1) according to one of the preceding clams, with the steps:
- provision of a cylinder head (4)
- provision of an exhaust manifold (2) with at least one passage opening (8)
- provision of a nut (9) having an internal thread section (11)
- provision of a threaded bolt (6), preferably retained on the cylinder head (4)
- relative positioning of exhaust manifold (2) and threaded bolt (6) such that the latter passes through the passage opening (8) of the exhaust manifold (2)
- screwing of the nut (9) with its internal thread section (11) onto the threaded bolt (6) and thereby application of force to the exhaust manifold (2) in the direction of the cylinder head (4), such that the nut (9) or an optional sleeve previously placed on the threaded bolt (6) passes through the passage opening (8) in the exhaust manifold (2) and is supported with a first supporting surface (14) axially on the cylinder head (4) or a seal lying on the cylinder head and the nut is supported with a second supporting surface (16) axially on the exhaust manifold (2), wherein the first supporting surface (14) is formed by an end face of an axial supporting section (13) of the nut or of the optional sleeve, the inner circumferential surface (19) of which is located at a radial distance from the threaded bolt (6),
**characterized in that**
the nut (9) is screwed onto the threaded bolt (6), such that the braking torque means (10) increase the loosening torque, and that the second supporting surface (16) is arranged on a radially protruding spring section (15) of the nut (9), which is elastically preloaded in axial direction on strewing of the nut (9) against the cylinder head (4).

14. The method according to Claim 13, **characterized in that** the passage opening (8) is dimensioned such that the nut (9) or the optional sleeve can pass through this axially, preferably with radial play on all sides, in particular of at least 0.1 mm, preferably of at least 0.2 mm.

## Revendications

1. Moteur à combustion interne (1) doté d'une culasse (4) à laquelle un collecteur d'échappement (2) est fixé à l'aide de moyens de fixation (3), les moyens de fixation (3) comprenant au moins un goujon fileté (6) maintenu au niveau de la culasse (4) et chargeant une ouverture traversante (8) dans le collecteur d'échappement (2) ainsi qu'au moins un écrou (9) avec une section de filet intérieur (11) vissée sur le goujon fileté (6) et à l'aide duquel le collecteur d'échappement (2) est chargé en force en direction de la culasse (4), l'écrou (9) appuyant de façon directe ou indirecte contre la culasse (4) dans le plan axial via une première surface d'appui (14) et/ou contre un joint reposant sur la culasse et appuyant contre le collecteur d'échappement (2) de façon directe ou indirecte dans le plan axial avec une deuxième surface d'appui, la première surface d'appui (14) étant formée à partir d'un côté avant d'une section d'appui (13) axiale traversant l'ouverture traversante (8) et la surface périphérique intérieure (19) est placée à une certaine distance dans le plan radial du goujon fileté (6), la section d'appui (13) étant formée par l'écrou (9) ou une douille facultative, **caractérisé en ce que** les moyens de fixation (3) comprennent des moyens de couple de frein (10) permettant d'accroître le couple de relâchement et que la deuxième surface d'appui (16) est réalisée au niveau d'une section de ressort (15) de l'écrou (9) saillante dans le plan radial et précontrainte de façon élastique dans la direction axiale.

2. Moteur à combustion interne selon la revendication 1, **caractérisé en ce que** la section d'appui (13) axiale est réalisée en forme de cylindre creux et de préférence sans filet.

3. Moteur à combustion interne selon l'une quelconque des revendications 1 ou 2, **caractérisé en ce que** l'extension axiale de la section d'appui (13) disposée à proximité de la section de filet intérieur (11) de l'écrou (9) est plus réduite que celle de la section de filet intérieur (11).

4. Moteur à combustion interne selon l'une quelconque des revendications précédentes, **caractérisé en ce que** la section d'appui (13) est disposée dans la culasse (4) avec un jeu radial par rapport au collecteur d'échappement (2) et/ou avec un jeu radial par rapport à la périphérie intérieure d'une ouverture (8) traversée par le goujon fileté (6).

5. Moteur à combustion interne selon l'une quelconque des revendications précédentes, **caractérisé en ce que** la section de ressort (15) est coudée par rapport à un plan radial (E) et s'étend en oblique en direction du collecteur d'échappement (2), notamment selon un angle compris entre 10° et 70°, de façon préférée entre 20° et 60°.

6. Moteur à combustion interne selon l'une quelconque des revendications précédentes, **caractérisé en ce que** la section de ressort (15) est formée par une ceinture périphérique de préférence fermée sur sa périphérie.

7. Moteur à combustion interne selon l'une quelconque des revendications précédentes, **caractérisé en ce que** la section de ressort (15) s'étend dans la direction radiale, à partir d'une région centrale de la vis comprenant la section d'appui (13) et la section de filet intérieur (11), de préférence à partir d'une région de transition prévue entre la section d'appui (13) et la section de filet intérieur (11).

8. Moteur à combustion interne selon l'une quelconque des revendications précédentes, **caractérisé en ce que** les moyens de couple de frein (10) sont prévus au niveau de l'écrou (9).

9. Moteur à combustion interne selon l'une quelconque des revendications précédentes, **caractérisé en ce que** les moyens de couple de frein (10) sont réalisés de façon à provoquer une augmentation du frottement entre l'écrou (9) et le goujon fileté (6) sur la base de la déformation élastique d'une section de serrage de filet (21) disposée à proximité de la section de filet intérieur (11).

10. Moteur à combustion interne selon l'une quelconque des revendications précédentes, **caractérisé en ce que** l'écrou (9) s'appuie avec la deuxième surface d'appui (16) contre le collecteur d'échappement (2) ou contre un disque glissant (22) reposant sur le collecteur d'échappement (2).

11. Moteur à combustion interne selon la revendication 10, **caractérisé en ce que** le disque glissant (22) est durci, notamment nitrifié.

12. Utilisation d'un écrou (9) comportant une section de filet intérieur (11) avec un filet intérieur (12) pour fixer un collecteur d'échappement (2) à une culasse (4) d'un moteur à combustion interne, l'écrou (9) comprenant des moyens de couple de frein (10) permettant d'augmenter le couple de relâchement et une première surface d'appui (14) prévue au niveau de l'écrou ou au niveau d'une douille facultative étant associée l'écrou pour réaliser un maintien axial contre la culasse et/ou contre un joint reposant sur la culasse et une deuxième surface d'appui pour réaliser un soutien axial au niveau du collecteur d'échappement (2) ou au niveau d'un disque glissant reposant sur le collecteur d'échappement (2), la deuxième surface d'appui (16) étant réalisée au niveau d'une section de ressort (15) de l'écrou (9) saillante dans le plan radial, précontrainte dans la direction axiale et la première surface d'appui (14) étant formée par un côté avant d'une section d'appui (13) axiale de l'écrou ou de la douille dont la surface périphérique intérieure (19) est placée à une certaine distance dans le plan radial du prolongement axial envisagé du filet intérieur (12).

13. Procédé de fixation d'un collecteur d'échappement (2) à une culasse (4) d'un moteur à combustion interne (1) selon l'une quelconque des revendications précédentes avec les étapes suivantes :
- mise à disposition d'une culasse (4) ;
- mise à disposition d'un collecteur d'échappement (2) avec au moins une ouverture traversante (8) ;
- mise à disposition d'un écrou (9) comportant une section de filet intérieur (11) ;
- mise à disposition d'un goujon fileté (6) de préférence maintenu au niveau de la culasse (4) ;
- positionnement relatif du collecteur d'échappement (2) et du goujon fileté (6) de telle sorte que celui-ci charge l'ouverture traversante (8) du collecteur d'échappement (2) ;
- vissage de l'écrou (9) avec sa section de filet intérieur (11) sur le goujon fileté (6) et ainsi alimentation en force du collecteur d'échappement (2) dans la direction de la culasse (4), de telle sorte que l'écrou (9) ou une douille facultative précédemment enfichée sur le fond de filet (6) traverse l'ouverture traversante (8) dans le collecteur d'échappement (2) et appuie avec une première surface d'appui (14) contre la culasse (4) dans le plan axial ou contre le joint reposant sur la culasse et l'écrou appuyant avec une deuxième surface d'appui (16) contre le collecteur d'échappement (2) dans le plan axial, la première surface d'appui (14) étant formée par un côté avant d'une section d'appui (13) axiale de l'écrou ou de la douille facultative dont la surface périphérique intérieure (19) se situe à une certaine distance dans le plan radial du goujon fileté (6) ;
**caractérisé en ce que** :
l'écrou (9) est vissé de telle sorte sur le goujon fileté (6) que les moyens de couple de frein (10) augmentent le couple de relâchement et que la deuxième surface d'appui (16) soit disposée contre une section de ressort (15) de l'écrou (9), saillante dans le plan radial, précontrainte de façon élastique dans la direction axiale contre la culasse (4) lors du vissage de l'écrou (9).

14. Procédé selon la revendication 13, **caractérisé en ce que** l'ouverture traversante (8) est dimensionnée de telle sorte que l'écrou (9) ou l'élément facultatif, peuvent la charger dans le plan axial, de façon préférée avec un jeu radial de tous les côtés, notamment d'au moins 0,1 mm, de préférence d'au moins 0, 2 mm.
